# EUROPEAN PATENT SPECIFICATION

(11) **EP 3 003 067 B1**
(45) Date of publication and mention of the grant of the patent: **20.12.2017**
(21) Application number: 14726606.8
(22) Date of filing: 27.05.2014
(51) Int. Cl.: A23L 2/46, A23L 3/18, A23L 3/36, A23L 5/00

(54) **A METHOD AND SYSTEM FOR PROVIDING A HEAT TREATED LIQUID PRODUCT**
VERFAHREN UND SYSTEM ZUR BEREITSTELLUNG EINES WÄRMEBEHANDELTEN FLÜSSIGPRODUKTS
PROCÉDÉ ET SYSTÈME PERMETTANT D'OBTENIR UN PRODUIT LIQUIDE TRAITÉ PAR VOIE THERMIQUE

(30) Priority: 31.05.2013 SE 1350673
(43) Date of publication of application: 13.04.2016
(73) Proprietor: Tetra Laval Holdings & Finance S.A., 1009 Pully (CH)
(72) Inventor: HAMBERG, Lars, S-416 53 Göteborg (SE); INNINGS, Fredrik, S-247 45 Torna Hällestad (SE)
(74) Representative: Tetra Pak - Patent Attorneys SE
(86) International application number: PCT/EP2014/060938
(87) International publication number: WO 2014/191405

(56) References cited:
- EP-A1- 0 247 245
- GB-A- 2 137 070
- GB-A- 2 252 230
- US-A- 4 416 194
- US-A- 4 543 263
- US-A1- 2008 160 149
- unknown: "SlurryICE - Thermal Energy Storage - Design Guide", , 16 September 2012 (2012-09-16), XP002727809, Retrieved from the Internet: URL:http://web.archive.org/web/20120415000 000*/http://www.epsltd.co.uk/files/slurryi ce_manual.pdf [retrieved on 2014-07-25]
- Sunwell: "Sunwell Technologies Homepage", , 5 December 1998 (1998-12-05), XP002727811, Retrieved from the Internet: URL:http://web.archive.org/web/19980901000 000*/http://www.sunwell.com/ [retrieved on 2014-07-25]

## Description

### Technical Field

The present invention relates to a method for providing a heat treated liquid product. More particularly, the present invention relates to a method of which the heat treatment is improving the quality of the final product.

### Background

In modern liquid processing systems heat treatment is often desirable for making the final product stable during subsequent processing and storage. Such heat treatment is normally performed by heating the liquid product to an elevated temperature, which temperature is sufficient to at least prevent microbial growth in the liquid product, as well as keeping the liquid product at that particular temperature for a specific period of time before the liquid product is cooled. Examples of such heat treatment is pasteurization and sterilization.

In liquid food processing it is a well known fact that excessive heat load on the food product should be avoided, since heat treatment of the food product may affect the food product negatively, e.g. by causing losses in vitamin and mineral content. Therefore it is of major importance to control the heating as well as the subsequent cooling of the food product during such heat treatment.

For some applications, e.g. food processing systems involving high viscous liquid products, heating has a much faster response than cooling. Since liquid product degradation is a direct function of heat exposure in respect of temperature as well as time, it would be beneficial to provide a heat treatment method which improves the quality of the final liquid product by allowing improved control of the heat load.
Further prior art is reflected by patent documents GB2137070A, EP0247245A1 and US2008/160149A1.

### Summary

It is, therefore, an object of the present invention to overcome or alleviate the above described problems.

The basic idea is to provide a heat treatment method, in which a liquid product concentrate is heat treated; whereafter said liquid product is combined with a predetermined amount of sterile water ice slurry. That is, the final liquid product is a blend of liquid product concentrate and water, whereby there is no need for coolant media, such as coolant water, for cooling down the product. Since cooling is achieved by combing the heated liquid product concentrate with the ice slurry, a less complex system may be utilized.

According to a first aspect of the invention a method for providing a heat treated liquid product is provided. The method comprises the steps of heating a flow of liquid product; providing an ice slurry of sterile water being separated from said flow of liquid product; and combining said flow of liquid product with said ice slurry for cooling down the flow of liquid product.

The method may further comprise the step of keeping the flow of liquid product at an elevated temperature, which temperature is sufficient to at least prevent microbial growth in the liquid product, for a predetermined time before the step of combining said flow of liquid product with said ice slurry. Hence, it may be possible to control not only the temperature but also the time for which the liquid product is subjected to said temperature whereby the entire heat load may be used as a parameter for controlling the heat treatment.

The method may further comprise the step of providing said flow of liquid product as a flow of a liquid product concentrate. This is advantageous in that the final product does not need to be concentrated since water content is increased during combination with the ice slurry.

The step of combining said flow of liquid product with said ice slurry may be performed such that the ratio between the amount of liquid product and the amount of sterile water ice slurry is between 10:1 and 20:1. This ratio is proven to be highly advantageous since rapid cooling is achieved without increasing the viscosity of the liquid product too much. Hence, standard heating devices may be utilized through which the liquid product will flow effectively. The temperature of the mix of liquid product and sterile water ice slurry may be between 30 and 50°C.

The step of providing said sterile water ice slurry may be performed by the steps of pumping water through a sterile filter, and transporting said sterile water through a hygienic freezing cylinder. This is advantageous in that standard equipment is used for sterilizing and cooling the water in an efficient and cost effective way.

Alternatively, the step of providing said sterile water ice slurry may be performed by the steps of sterilize water by heating, and transporting said sterile water through a hygienic freezing cylinder.

The liquid product may be a liquid food product, such as a low acid beverage or similar.

### Brief Description of Drawings

The above, as well as additional objects, features, and advantages of the present invention, will be better understood through the following illustrative and nonlimiting detailed description of preferred embodiments of the present invention, with reference to the appended drawings, wherein:
Fig. 1 is a schematic view of a prior art system for heat treating a liquid product;
Fig. 2 is a diagram showing the temperature of the liquid product flowing through the system of Fig. 1;
Fig. 3 is a schematic view of a system, which does not form part of the invention, for heat treating a liquid product according to various methods;
Fig. 4 is a diagram showing the temperature of the liquid product flowing through the system of Fig. 3;
Fig, 5a and 5b are schematic views of sub-systems, which do not form part of the invention, for providing an ice slurry; and
Fig. 6 is a method scheme for a heat treating method according to an embodiment.

### Detailed Description

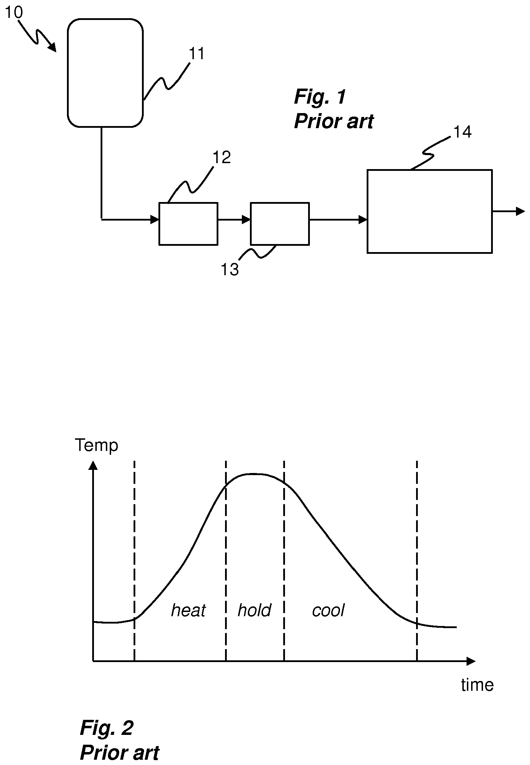

Starting with Fig. 1 a prior art heat treatment system 10 is shown. The system 10 includes a batch tank 11 enclosing a certain amount of liquid product to be heated.

Upon heating, the liquid product is transported through a heat exchanger 12 wherein the temperature of the liquid product is elevated to a predetermined temperature for achieving the required heat treatment, such as pasteurization. The liquid product is thereafter kept at the elevated temperature during transportation through a holding cell 13 for ensuring the desired heat load to the liquid product. After heat treatment is completed, the liquid product is typically transported through a further heat exchanger 14 for cooling down the liquid product.

Fig. 2 shows the temperature of the liquid product as it is transported through the system 10 of Fig. 1. As can be seen, a first heating zone corresponds to the liquid product passing through the heat exchanger 12. Following that, the temperature is more or less constant as the liquid product is transported through the holding cell 13 before it is cooled down by the subsequent heat exchanger 14. As is shown in Fig. 2, the temperature derivative is approximately the same during heating and cooling.

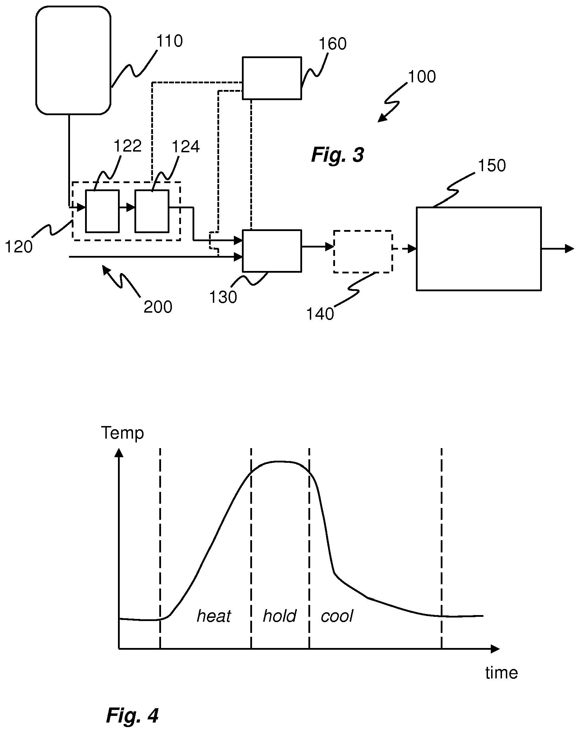

Now turning to Fig. 3 a liquid product system 100, which does not form part of the invention, is shown.
The present system 100 is advantageous for a wide range of liquid products, such as liquid food, pharmaceuticals, cosmetics, etc for which temperature control is critical. As is shown in Fig. 3 a liquid product supply 110 is provided. The liquid product supply 110 may e.g. be a batch tank, or e.g. upstream liquid product processing equipment capable of supplying a flow of liquid product.

Preferably, the liquid product entering the system 100 is a concentrate, whereby at least a part of the water content required for the final product is reduced to a level below the desired water content of the final liquid product. The liquid product, or liquid product concentrate is transported through a heating device 120 for increasing the temperature of the liquid product, or liquid product concentrate up to a level sufficient to prevent the growth of micro organisms, e.g. up to a pasteurization temperature or a sterilization temperature.

Preferably, the heat treatment device 120 includes a heat exchanger 122 and a holding cell 124 arranged in series such that the elevated temperature may be maintained for a predetermined time. The heat exchanger 122 and the holding cell 124 may be provided as one single device. Further, the heat exchanger 122 may be replaced by other heating devices, such as an ohmic heater or a microwave heater or other heating devices with a fast response.

The heating device 120 may preferably be configured for a high viscous liquid product concentrate, such as a juice concentrate or similar high acid liquid product concentrate. In case of fruit juice concentrate, the viscosity may be in the range of 2500 - 3500 cpa. Correspondingly, for such juice concentrate the desired heat treatment temperature may e.g. be 90 - 95°C, while the holding cell 124 is configured to maintain the elevated temperature for approximately 15 seconds.

The heated liquid product is pumped into a combiner 130, which combiner 130 serves to increase the water content of the liquid product as well as reducing the temperature of the liquid product. For this, the combiner 130 receives the flow of liquid product as well as a sterile water ice slurry via a sterile water ice slurry supply 200 via two inlets. As the temperature of the ice slurry is far lower than the temperature of the liquid product, the temperature of the combined liquid product will rapidly decrease. Hence, rapid cooling is achieved.

Preferably, the amount of liquid product entering the combiner 130 may be in the range of 90-95% of the combined product, such that the ratio between the amount of liquid product entering the combiner 130 and the amount of sterile water ice slurry entering the combiner 130 is between 10:1 and 20:1. Such ratio may provide a rapid cooling of the liquid product from 90°C down to 30-50°C by the introduction of the sterile water ice slurry.

After passing through the combiner 130, the combination of liquid product and water may pass through a subsequent cooler for a further reduction of temperature of the liquid product before additional processing equipment 150, such as homogenizers, separators, etc. In another embodiment, the combined liquid product could be transported to a filling machine, wherein the liquid product is stored in consumer packages.

As is also shown in Fig. 3, a controller 160 is provided for implementing control schemes to various components of the system 100. For example, the controller 160 is configured to control the operating parameters of the heat treatment device 120 such that the heating parameters (e.g. maximum temperature, temperature gradient, holding time, flow, pressure, etc) may be adjusted in accordance with required parameters for each specific liquid product. Further, the controller 160 may be configured to control the operating parameters of the sterile water ice slurry supply 200 such that associated parameters (e.g. flow, pressure, temperature, viscosity, etc) may be adjusted in accordance with required parameters for the liquid product to be mixed. As a further option, the controller 160 may be configured to control operating parameters of the combiner 130 such that the combiner parameters (e.g. speed, pressure, valve positions, etc) may be adjusted in accordance with required parameters for the combined liquid product.

Now turning to Fig. 4, a diagram presenting the temperature curve of the liquid product is shown. Starting at the left end of the diagram, the incoming liquid product, or liquid product concentrate, has a constant temperature. This part of the diagram thus represents the temperature of the liquid product stored in the liquid product supply 110 of Fig. 3. As the liquid product is heated by heat treatment device 120, the temperature is gradually increasing until a desired maximum temperature is reached. The temperature is kept substantially constant for a period of time, until the liquid product is mixed with the sterile water ice slurry. The temperature will then rapidly decrease due to the combining with ice slurry; whereafter the subsequent cooler 140 will reduce the temperature even further, however at a considerably lower rate. Hence, combining will ice slurry will provide a much more rapid cooling and thus allows more accurate controlling of the temperature of the liquid product as well as a significantly lower heat load.

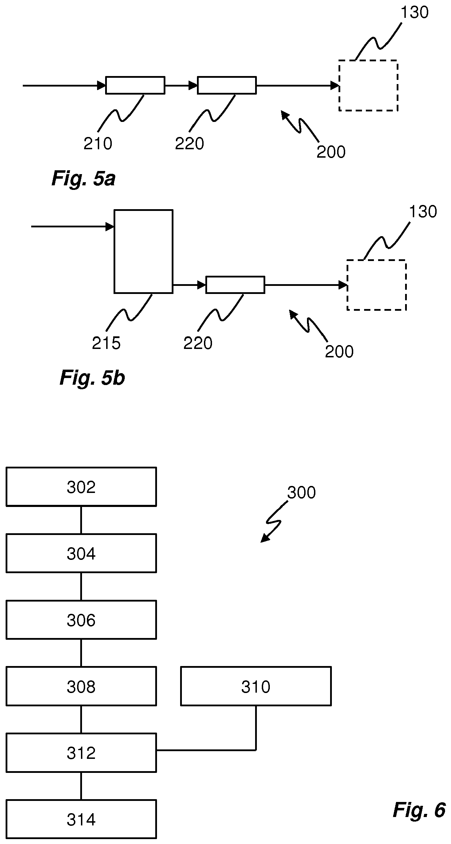

Now turning to Fig. 5a and 5b, two examples of systems, which do not form part of the invention, for obtaining an ice slurry supply 200 are shown. Starting with Fig. 5a, non-sterile water is pumped through a sterile filter 210 and then passes through a freezing cylinder 220 for providing a mass of ice slurry before the combiner 130. The exemplary system of Fig. 5b, includes a heat treatment device 215 for replacing the sterile filter 210 of Fig. 5a. The heat treatment device 215 may be any suitable heater, e.g. an UHT system such as the Tetra Plex®, currently available on the market.

Now turning to Fig. 6, embodiments of a method 300 will be described. Starting at step 302, a liquid product is provided. The liquid product may be e.g. a liquid food product, such as high acid beverage concentrate. In step 304, the liquid product is fed to a heat treatment device, whereby heating of the liquid product is provided during step 306. Optionally, the liquid product is transported through a holding cell during a subsequent step 308. In step 310 a sterile water ice slurry is provided. Step 310 may preferably be performed in parallel with steps 302, 304, 306, and 308.

The sterile water ice slurry is combined with the liquid product in step 312, whereby the temperature of the liquid product is rapidly decreased. An optional step 314 may be performed for further cooling of the liquid product.

## Claims

1. A method for providing a heat treated liquid food product, comprising the steps of:
heating (306) a flow of liquid food product;
providing (310) an ice slurry of sterile water being separated from said flow of liquid food product; and
combining (312) said flow of liquid food product with said ice slurry for cooling down the flow of liquid food product.

2. The method of claim 1, further comprising the step of keeping (308) the flow of liquid food product at an elevated temperature, which temperature is sufficient to at least prevent microbial growth in the liquid product, for a predetermined time before the step of combining said flow of liquid food product with said ice slurry.

3. The method of claim 1 or 2, further comprising the step of providing (302) said flow of liquid food product as a flow of a liquid product concentrate.

4. The method according to any one of the preceding claims, wherein the step of combining (312) said flow of liquid food product with said ice slurry is performed such that the ratio between the amount of liquid food product and the amount of sterile water ice slurry is between 10:1 and 20:1.

5. The method according to any one of the preceding claims, wherein the temperature of the mix of liquid food product and sterile water ice slurry is between 30 and 50°C.

6. The method according to any one of the preceding claims, wherein the step of providing said sterile water ice slurry is performed by the steps of:
pumping water through a sterile filter, and
transporting said sterile water through a hygienic freezing cylinder.

7. The method according to any one of claims 1 to 5, wherein the step of providing said sterile water ice slurry is performed by the steps of:
sterilize water by heating, and
transporting said sterile water through a hygienic freezing cylinder.

## Patentansprüche

1. Verfahren zum Bereitstellen eines wärmebehandelten flüssigen Lebensmittelprodukts, umfassend die Schritte:
Erhitzen (306) eines Flusses von flüssigem Lebensmittelprodukt;
Bereitstellen (310) einer Eisaufschlämmung von sterilem Wasser, das von dem Fluss von flüssigem Lebensmittelprodukt abgetrennt wird; und
Kombinieren (312) des Flusses von flüssigem Lebensmittelprodukt mit der Eisaufschlämmung zum Abkühlen des Flusses von flüssigem Lebensmittelprodukt.

2. Verfahren gemäß Anspruch 1, ferner umfassend den Schritt, den Fluss von flüssigem Lebensmittelprodukt vor dem Schritt des Kombinierens Flusses von flüssigem Lebensmittelprodukt mit der Eisaufschlämmung für eine vorbestimmte Zeit bei einer erhöhten Temperatur zu halten (308), welche Temperatur ausreicht, um wenigstens mikrobielles Wachstum in dem flüssigen Produkt zu verhindern.

3. Verfahren gemäß Anspruch 1 oder 2, ferner umfassend den Schritt des Bereitstellens (302) des Flusses von flüssigem Lebensmittelprodukt als Fluss eines Flüssigproduktkonzentrats.

4. Verfahren gemäß einem der vorstehenden Ansprüche, wobei der Schritt des Kombinierens (312) des Flusses von flüssigem Lebensmittelprodukt mit der Eisaufschlämmung so durchgeführt wird, dass das Verhältnis zwischen der Menge von flüssigem Lebensmittelprodukt und der Menge von steriler Wasser-Eis-Aufschlämmung zwischen 10:1 und 20:1 beträgt.

5. Verfahren gemäß einem der vorstehenden Ansprüche, wobei die Temperatur des Gemischs von flüssigem Lebensmittelprodukt und steriler Wasser-Eis-Aufschlämmung zwischen 30 und 50 °C beträgt.

6. Verfahren gemäß einem der vorstehenden Ansprüche, wobei der Schritt des Bereitstellens der sterilen Wasser-Eis-Aufschlämmung durch folgende Schritte durchgeführt wird:
Pumpen von Wasser durch ein Sterilfilter und
Befördern des sterilen Wassers durch einen hygienischen Gefrierzylinder.

7. Verfahren gemäß einem der Ansprüche 1 bis 5, wobei der Schritt des Bereitstellens der sterilen Wasser-Eis-Aufschlämmung durch folgende Schritte durchgeführt wird:
Sterilisieren von Wasser durch Erhitzen und
Befördern des sterilen Wassers durch einen hygienischen Gefrierzylinder.

## Revendications

1. Méthode de fourniture d'un produit alimentaire liquide traité thermiquement, comprenant les étapes consistant à :
chauffer (306) un courant de produit alimentaire liquide ;
fournir (310) un coulis de glace d'eau stérile étant séparé dudit courant de produit alimentaire liquide ; et
combiner (312) ledit courant de produit alimentaire liquide avec ledit coulis de glace afin de refroidir le courant de produit alimentaire liquide.

2. Méthode selon la revendication 1, comprenant en outre l'étape consistant à maintenir (308) le courant de produit alimentaire liquide à une température élevée, laquelle température est suffisante pour au moins empêcher une croissance microbienne dans le produit liquide, pendant une période prédéterminée avant l'étape consistant à combiner ledit courant de produit alimentaire liquide avec ledit coulis de glace.

3. Méthode selon la revendication 1 ou 2, comprenant en outre l'étape consistant à fournir (302) ledit courant de produit alimentaire liquide sous forme de courant d'un concentré de produit liquide.

4. Méthode selon l'une quelconque des revendications précédentes, dans laquelle l'étape consistant à combiner (312) ledit courant de produit alimentaire liquide avec ledit coulis de glace est effectuée de sorte que le rapport entre la quantité de produit alimentaire liquide et la quantité de coulis de glace d'eau stérile se trouve entre 10:1 et 20:1.

5. Méthode selon l'une quelconque des revendications précédentes, dans laquelle la température du mélange de produit alimentaire liquide et de coulis de glace d'eau stérile se trouve entre 30 et 50 °C.

6. Méthode selon l'une quelconque des revendications précédentes, dans laquelle l'étape consistant à fournir ledit coulis de glace d'eau stérile est effectuée par les étapes consistant à :
pomper de l'eau à travers un filtre stérile ; et
transporter ladite eau stérile via un organe hygiénique générateur de glace.

7. Méthode selon l'une quelconque des revendications 1 à 5, dans laquelle l'étape consistant à fournir ledit coulis de glace d'eau stérile est effectuée par les étapes consistant à :
stériliser de l'eau par chauffage ; et
transporter ladite eau stérile via un organe hygiénique générateur de glace.
